# EUROPEAN PATENT SPECIFICATION

(11) **EP 3 584 189 B1**
(45) Date of publication and mention of the grant of the patent: **26.01.2022**
(21) Application number: 19179634.1
(22) Date of filing: 12.06.2019
(51) Int. Cl.: B65D 41/34, B65D 55/16, B65D 41/32, B65D 81/26

(54) **TETHERED BRIDGE CLOSURE**
ANGEBUNDENER BRÜCKENVERSCHLUSS
FERMETURE CAPTIVE DE PONT

(30) Priority: 12.06.2018 US 201862683905 P
(43) Date of publication of application: 25.12.2019
(73) Proprietor: Closure Systems International Inc., Memphis, Tennessee 38119 (US)
(72) Inventor: EDIE, John, Linden, Indiana 47955 (US); LUTTON, Leland T., Crawfordsville, Indiana 47933 (US)
(74) Representative: Algemeen Octrooi- en Merkenbureau B.V.

(56) References cited:
- US-A1- 2011 000 871
- US-A1- 2011 174 760
- US-A1- 2012 285 921

## Description

### FIELD OF THE INVENTION

The present invention relates generally to a polymeric closure for a package. More specifically, the present invention relates to a tethered bridge one-piece polymeric closure to assist in preventing or inhibiting the closure from being separated from the container.

### BACKGROUND OF THE INVENTION

Polymeric closures have been used in many applications over the years in conjunction with containers. One type of polymeric closure that has been used with containers is a tamper-evident polymeric closure. Tamper-evident closures are used to prevent or inhibit tampering by providing a visible indication to a user if the closure has been opened. This visual indication typically divides the closure into two separate components after the tamper-evident feature has been broken. The top portion of the closure is then removed from the container to gain access to the contents of the containers. One drawback of tamper-evident closures being separated into two individual components is that the top portion may not be recycled along with the remainder of the closure and container. This scenario raises potential environmental concerns with so many containers having tamper-evident features that can be separated into two individual components.

United States patent application US2011 174760 discloses a cap that comprises a circular skirt, said cap including an irremovable portion fixedly attached about the neck of a vessel and a removable portion removably attached to the neck, the irremovable and removable portions being separated by a first weakening line. In order to maintain the removable portion of the skirt attached to the irremovable portion of the skirt after the first opening, the skirt is provided with a second peripheral weakening line. It is also provided that the first weakening line extends less than 360°, while the two ends of the second weakening line are located along the periphery of the skirt respectively between a first of the two ends of a linking portion of the skirt and the hasp closest to said first end, and between the second end of the linking portion and the hasp closest to said second end.

United States patent application US2011/000871 A1 discloses a stopper comprising a capping lid which, in the back portion of a tubular base for surrounding a container neck, forms part of the upper end of this base, forming a joint with hinges which defines a geometric axis for pivoting the lid between the open and closed service positions. The joint has two lines of least mechanical resistance, which extend from the upper end to the lower end of the base, being positioned, at the level of said upper end, on both sides of the joint, and which are designed to break before the joint can tear completely when the lid, in open position thereof, is rotated on itself around a geometric axis transverse to the pivoting axis.

United States patent application US 2012/285921 discloses a container for preventing loss of a stopper and idle rotation thereof, by preventing wobbling of a stopper body by means of a sub-connector formed at either side of a main connector, at a state where the stopper is open, maintaining a stable posture of the opened stopper to thus remarkably enhance the feeling of use, and preventing an undercut from being formed at the inner side of the stopper due to a hinge portion to thus double productivity of the stopper through injection molding.

It would be desirable to provide a closure that has tamper-evident features that address these above-noted environmental concerns, while still performing all of the desirable properties of a closure.

### SUMMARY

According to a first aspect, the present invention provides a one-piece closure according to claim 1.

According to a second aspect, the invention provides a package according to claim 10.

According to a third aspect, the invention provides a method according to claim 11.

The above summary is not intended to represent each embodiment or every aspect of the present invention. Additional features and benefits of the present invention are apparent from the detailed description and figures set forth below.

### BRIEF DESCRIPTION OF THE DRAWINGS

Other advantages of the invention will become apparent upon reading the following detailed description and upon reference to the drawings in which:
FIG. 1A is a top perspective view of a closure in a closed position according to one embodiment.
FIG. 1B is a cross-sectional view taken generally along line 1B-1B in FIG. 1A.
FIG. 1C is a side view of the closure of FIG. 1A.
FIG. 2A is a top perspective view of the closure of FIG. 1A in an open position.
FIG. 2B is an enlarged view of generally circular area 2B in FIG. 2A.
FIG. 3A is a top perspective view of a package including the closure of FIG. 1A and a container in a closed position according to one embodiment.
FIG. 3B is a cross-sectional view taken generally along line 3B-3B in FIG. 3A.
FIG. 3C is a side view of the closure of FIG. 3A.
FIG. 4 is a top perspective view of the closure and container of FIG. 3A in the open position.

While the invention is susceptible to various modifications, specific embodiments thereof have been shown by way of example in the drawings and will herein be described in detail. It should be understood, however, that it is not intended to limit the invention to the particular forms disclosed, but on the contrary, the intention is to cover all modifications falling within the scope of the invention as defined by the appended claims.

### DETAILED DESCRIPTION

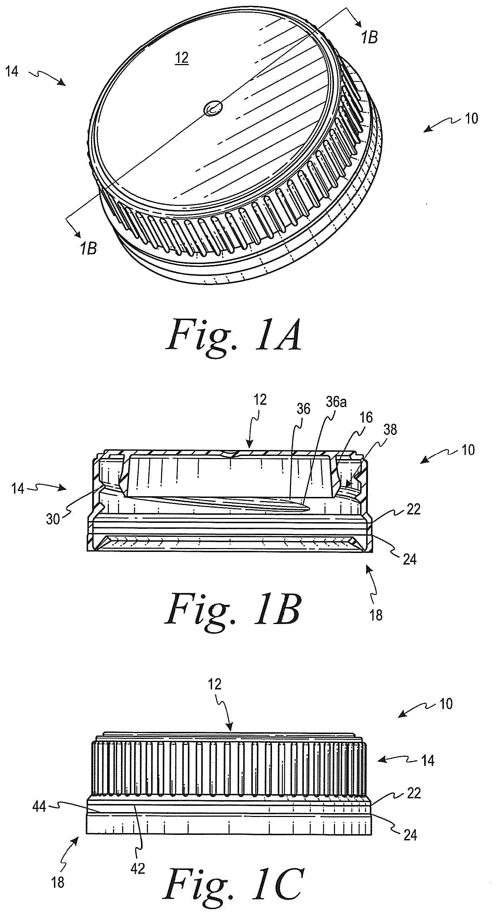

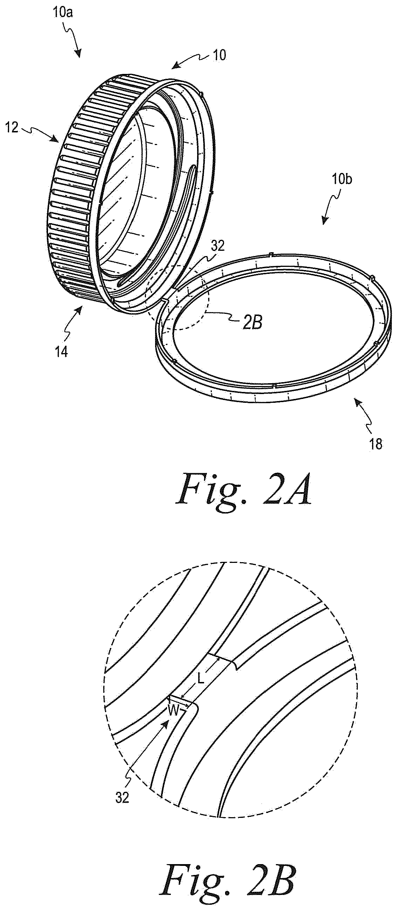

FIGS. 1A-C and 2A-B illustrate a polymeric closure 10 according to one embodiment of the present invention. The closures are configured to be placed on a container or bottle that contain product. The product is typically a liquid product, but also may be a solid product or a combination of a liquid and solid product. The polymeric closure 10 of FIGS. 1A-C and 2A-B is a one-piece closure assembly. The polymeric closure 10 is generally cylindrically shaped.

Referring still to FIG 1A-C and 2A-B, the polymeric closure 10 includes a polymeric top wall portion 12, a polymeric annular skirt portion 14 that depends from the polymeric top wall portion 12, a polymeric continuous plug seal 16 (FIG. 1B), and a tamper-evident band 18 (FIG. 1B). The top wall portion 12 extends across the entire top of the closure without any openings.

The polymeric annular skirt portion 14 includes a first frangible connection 22 that partially detachably connects to a first section and a second section of the polymeric annular skirt portion 14. The polymeric annular skirt portion 14 of FIG. 1B also includes an internal thread formation 30. The internal thread formation includes a plurality of leads in one embodiment. The internal thread formation 30 is configured for mating engagement with a corresponding external thread formation of a neck portion of a container. The internal thread formation 30 depicted in FIG. 1B includes a first closure lead 36 and a second closure lead 38. It is contemplated that the internal thread formation may be continuous in another embodiment.

The first closure lead 36 begins near the polymeric top wall portion 12 at a first position (not shown in FIG. 1B) and extends in a helical fashion to a second position 36a closer to the tamper-evident band 18. Similarly, the second closure lead 38 begins near the polymeric top wall portion 12 at a first position (not shown in FIG. 1B) and extends in a helical fashion to a second position (not shown in FIG. 1B) closer to the tamper-evident band 18. The first and second closure leads 36, 38 are referred collectively as a double lead closure thread. Each of the first and second closure leads 36, 38 is continuous. The first positions of the first and second closure leads 36, 38 are located roughly 180 degrees apart from each other and, thus, begin on generally opposing sides of the closure 10.

It is contemplated that the first and second closure leads may be discontinuous. It is also contemplated that the internal thread formation of the closure may differ from a helical thread formation. It is also contemplated that other internal thread formations may be used in the closure.

The polymeric continuous plug seal 16 of FIG. 1B depends from the polymeric top wall portion 12. The continuous plug seal 16 is spaced from an interior surface of the polymeric annular skirt portion 14.

In another embodiment, the closure may be sealed using a continuous liner located generally adjacent to a top wall portion. It is contemplated that other sealing methods may be used in sealing the closure.

Referring specifically to FIG. 1B, the polymeric tamper-evident band 18 of the closure 10 is located at the bottom thereof (i.e., an end opposite of the polymeric top wall portion 12). The tamper-evident band 18 depends from and is partially detachably connected to the annular skirt portion 14 by the second frangible connection 24. The tamper-evident band 18 works in conjunction with the container to indicate to a user that the contents of the container may have been accessed. More specifically, the tamper-evident band 18 is designed to partially separate from the annular skirt portion 14 if a user opens the package and gains access to the container as shown, for example, in FIGS. 2A and 2B.

The first and second frangible connections 22, 24 may be formed by molded-in-bridges in one embodiment. The molded-in-bridges are typically formed using a feature in the mold. In another embodiment, the polymeric tamper-evident band may be formed using scoring or scored lines, notches, leaders, nicks or other lines of weaknesses.

Each of the first and second frangible connections 22, 24 generally extends from 300 to 355 degrees around the circumference of the closure. More specifically, each of the first and second frangible connections 22, 24 extends from 320 to 355 degrees around the circumference of the closure. In another embodiment, each of the first and second frangible connections 22, 24 extends from 330 to 355 degrees around the circumference of the closure. In a further embodiment, each of the first and second frangible connections 22, 24 extends from 325 to 345 degrees.

When the first and second frangible connection 22, 24 are broken, a tethered bridge 32 is exposed as shown, for example, in FIGS. 2A, 2B. The tethered bridge 32 is attached to a portion of the second closure portion 10b (including the tamper-evident band 18) and a portion of the first closure portion or main body 10a (including the annular skirt portion 14 and the polymeric top wall portion 12). The tethered bridge 32 assists in maintaining the closure 10 as a one-piece assembly after the first and second frangible connections 22, 24 have been broken.

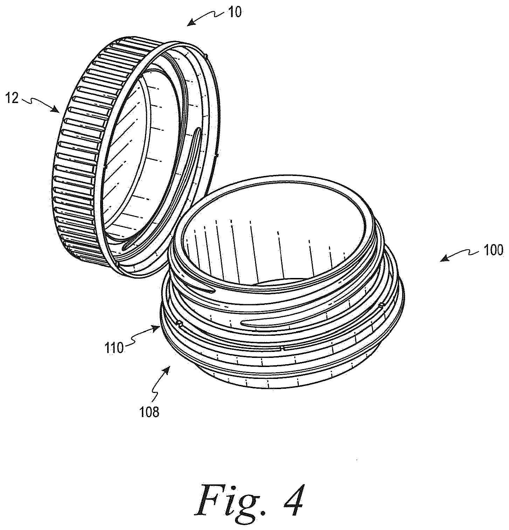

When the internal thread formation of the first closure portion is not in mating engagement with the external thread formation of the container, the first closure portion 10a is adapted to be spaced from the second closure portion 10b via the tethered bridge 32. One non-limiting example of the same is shown in FIGS. 2A, 2B with only the closure 10, while FIG. 4 depicts the same with a portion of the container 108. To assist in eliminating or reducing the chances of the first closure portion 10a from interfering with a user while, for example, drinking the contents of a container 108, the tethered bridge 32 extends from 5 to 60 degrees around the circumference of the closure in one embodiment. In other embodiments, the tethered bridge 32 generally extends from 5 to 40 degrees around the circumference of the closure. In a further embodiment, the tethered bridge 32 extends from 5 to 30 degrees around the circumference of the closure. In yet another embodiment, the tethered bridge extends from 15 to 25 degrees around the circumference of the closure.

The tethered bridge 32 has a width W shown in FIG. 2B that provides the spacing between the first closure portion 10a from the second closure portion 10b. The width W is generally perpendicular to the outer periphery of the closure. In one embodiment, the width W of the tethered bridge is generally at least 1 mm, desirably at least 2 mm or even more desirably at least 3 mm. The width W of the tethered bridge 32 is generally from 1.5 to 4 mm and more specifically from 2 to 4 mm.

The tethered bridge 32 also has a length L as shown best in FIG. 2B. The length L is generally tangential to the outer periphery of the closure..

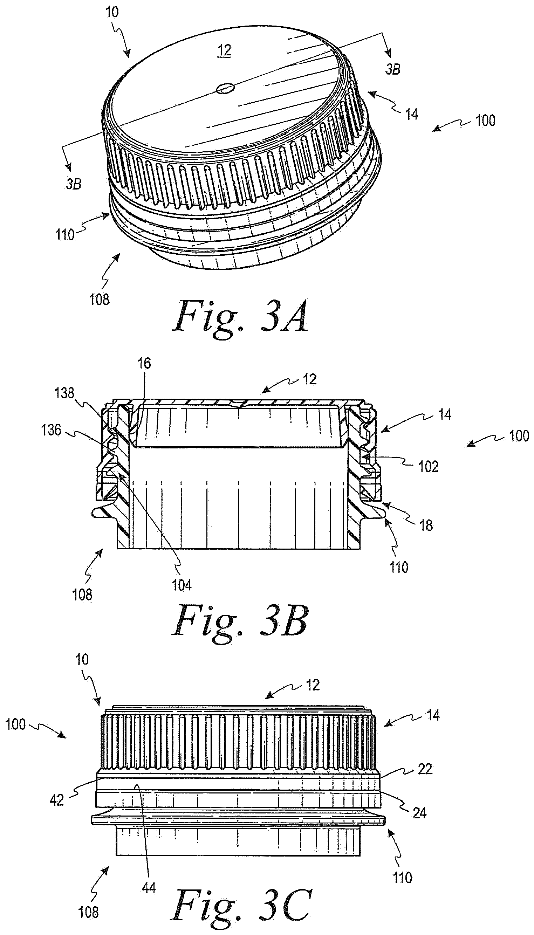

One non-limiting example of a closure and a container forming a package is shown and discussed in conjunction with FIGS. 3A-3C.

The closures of the present invention may be used with a container 108 used to form a package 100 of FIGS. 3A-3C. A portion of the container 108 is shown in FIGS. 3A-3C and includes a neck portion 102 that defines an opening. The neck portion 102 of the container 108 includes an external thread formation 104 and a continuous outer ring 110. The external thread formation 104 includes a first finish lead 136 and a second finish lead 138 (FIG. 3B). The external thread formation 104 (finish leads 136, 138) engages with the corresponding internal thread formation 30 (closure leads 36, 38) to seal the package 100.

The first finish lead 136 begins near the open end of the container 108 and extends in a helical fashion to a second position that is closer to the closed end of the container. Similarly, the second finish lead 138 starts closer to the open end of the container 108 and extends in a helical fashion to a second position that is closer to the closed end of the container. Each of the first and second finish leads 136, 138 is continuous. The first positions of the first and second finish leads 136, 138 are located roughly 180 degrees apart from each other and, thus, begin on opposing sides of the neck 102 of the container 108. When opening the container 108, the first closure lead 36 is desirably in contact with the first finish lead 136 and the second closure lead 38 is desirably in contact with the second finish lead 138. It is contemplated that the external thread formation of the container may have discontinuous leads.

It is contemplated that the external thread formation of the container may be different than that disclosed with respect to container 108.

The continuous outer ring 110 assists in positioning the tamper-evident band 18 when the first closure portion 10a is unthreaded from the neck 102 of the container 108 by the breaking of the first and second frangible connections 22, 24.

The closures of the present invention may include an oxygen-scavenger material. This oxygen-scavenger material may be distributed within the closure or may be a separate layer. The oxygen-scavenger material may be any material that assists in removing oxygen within the container, while having little or no effect on the contents within the container.

Alternatively, or in addition to, the closures may include an oxygen-barrier material. The oxygen-barrier material may be added as a separate layer or may be integrated within the closure itself. The oxygen-barrier materials assist in preventing or inhibiting oxygen from entering the container through the closure. These materials may include, but are not limited to, ethylene vinyl alcohol (EVOH). It is contemplated that other oxygen-barrier materials may be used in the closure.

The top wall portion 12 and the annular skirt portion 14, the continuous plug seal 16 and the tethered bridge 32 are made of polymeric material. The top wall portion 12, the annular skirt portion 14, the continuous plug seal 16 and the tethered bridge 32 are typically made of an olefin (e.g., polyethylene (PE), polypropylene (PP)), PET or blends thereof. One example of a polyethylene that may be used is high density polyethylene (HDPE). It is contemplated that the top wall portion, the annular skirt portion, the continuous plug seal and the tethered bridge may be made of other polymeric materials. The tamper-evident band 18 is typically made of the same materials as the top wall portion 12, the annular skirt portion 14, the continuous plug seal 16 and the tethered bridge 32.

The closures are typically formed by processes such as injection or compression molding, extrusion or the combination thereof.

In one process, the tethered bridge is formed by double slitting using two blades. The double-slitting is formed in one process along general lines 42 and 44 of FIG. 1C and uses scoring or scored lines, notches, leaders, nicks or line of weaknesses to provide separation of the connection along both general lines 42 and 44 via respective first and second frangible connections 22, 24. The general lines 42 and 44 are located on opposite sides of the tether to be formed. The slitting may form this frangible connection or the frangible connection may be formed at a later time. The double slitting in this process does not extend entirely around the circumference of the closure 10. Specifically, the general line 42 extends generally around the circumference of the closure 10 except in the area that eventually forms the tethered bridge 32, while general line 44 extends around the circumference of the closure 10 except in the area that eventually forms attached the tethered bridge 32. It is contemplated that the lines may be different than those depicted in FIG. 1C.

In other process, the tethered bridge may be formed by using molds in the absence of slitting. In one process, general lines 42 and 44 are formed by using bridges (e.g., molded-in-bridges) to provide separation of the connection along both general lines 42 and 44 via respective first and second frangible connections 22, 24. The molded-in-bridges do not extend entirely around the circumference of the closure 10. Specifically, the general line 42 extends generally around the circumference of the closure 10 except in the area that eventually forms the tethered bridge 32, while general line 44 extends around the circumference of the closure 10 except in the area that eventually forms the tethered bridge 32.

The container 108 is typically made of polymeric material. One non-limiting example of a material to be used in forming a polymeric container is polyethylene terephthalate (PET), polypropylene (PP) or blends using the same. It is contemplated that the container may be formed of other polymeric or copolymer materials. It is also contemplated that the container may be formed of glass. The container 108 typically has an encapsulated oxygen-barrier layer or oxygen barrier material incorporated therein.

To open the container 108 and gain access to the product therein, the closure 10 is unthreaded by turning the closure 10 with respect to the container 108. After the closure has been unthreaded, the closure 10 is spaced apart as shown in FIG. 4.

The polymeric closures are desirable in both low-temperature and high-temperature applications. The polymeric closures may be used in low-temperature applications such as an ambient or a cold fill. These applications include water, sports drinks, aseptic applications such as dairy products, and pressurized products such as carbonated soft drinks. It is contemplated that other low-temperature applications may be used with the polymeric closures formed by the processes of the present invention.

The polymeric closures may be exposed to high-temperature applications such as hot-fill, pasteurization, and retort applications. A hot fill application is generally performed at temperatures around 85°C (185°F), while a hot-fill with pasteurization is generally performed at temperatures around 96°C (205°F). Retort applications are typically done at temperatures greater than 121°C (250°F). It is contemplated that the polymeric closures can be used in other high-temperature applications.

## Claims

1. A one-piece closure (10) comprising:
a first closure portion (10a) including:
a polymeric top wall portion (12); and
a polymeric annular skirt portion (14) depending from the polymeric top wall portion (12), the annular skirt portion (14) including an internal thread formation (30) for mating engagement with an external thread formation of a container, the polymeric annular skirt portion (14) including a first frangible connection (22) that partially detachably connects to a first section and a second section of the polymeric annular skirt portion (14); and
a second closure portion (10b) including a polymeric tamper-evident band (18), the tamper-evident band (18) depending from and being partially detachably connected to the polymeric annular skirt portion (14) by a second frangible connection (24);
wherein when the first and second frangible connections (22, 24) are broken, a tethered bridge (32) is exposed, the tethered bridge (32) being attached to a portion of the second closure portion (10b) and a portion of the first closure portion (10a), the tethered bridge (32) extending from 5 to 60 degrees around the circumference of the closure (10), wherein each of the first and second frangible connections (20,24) extend from 300 to 355 degrees around the circumference of the closure (10),
wherein when the internal thread formation (30) of the first closure portion (10a) is not in mating engagement with the external thread formation of the container, the first closure portion (10a) being adapted to be spaced from the second closure portion (10b) via the tethered bridge (32).

2. The closure according to claim 1, wherein the tethered bridge (32) extends from 5 to 40 degrees around the circumference of the closure (10) and wherein each of the first and second frangible connections (22, 24) extends from 320 to 355 degrees around the circumference of the closure (10), preferably wherein the tethered bridge (32) extends from 15 to 35 degrees around the circumference of the closure (10) and wherein each of the first and second frangible connections (22, 24) extends from 325 to 345 degrees around the circumference of the closure (10).

3. The closure according to claim 1 or 2, wherein the shape of the closure (10) is generally cylindrical.

4. The closure according to one or more of claims 1-3, wherein the closure (10) further includes an oxygen-scavenger material or an oxygen-barrier material.

5. The closure according to one or more of claims 1-4, wherein the internal thread formation (30) of the annular skirt portions includes at least one helical thread element.

6. The closure according to claim 1, wherein the length of the tethered bridge (32) is greater than 3 mm.

7. The closure according to claim 1, wherein the length of the tethered bridge (32) is from 2 to 5 mm.

8. The closure according to one or more of claims 1-7, wherein the closure (10) comprises polyolefins.

9. The closure according to one or more of claims 1-8, wherein the first closure portion (10a) further includes a polymeric continuous plug seal (16) depending from the polymeric top wall portion (12), the continuous plug seal (16) being spaced from an interior surface of the polymeric annular skirt portion (14).

10. A package comprising:
a container (108) having a neck portion (102) defining an opening, the container (108) having an external thread formation (104) on the neck portion (102); and
a one-piece closure (10) according to one or more of claims 1-9, being configured for fitment to the neck portion (102) of the container for closing the opening, the one-piece closure (10) including a first closure portion (10a) and a second closure portion (10b),
wherein the internal thread formation (30) is configured for mating engagement with the external thread formation (104) of the neck portion (102) of the container (108).

11. A method of forming a one-piece closure (10), the method comprising:
molding a first closure portion (10a) and a second closure portion (10b) of the one-piece closure (10), the first closure portion (10a) including a polymeric top wall portion (12) and a polymeric annular skirt portion (14) depending from the polymeric top wall portion (12), the annular skirt portion (14) including an internal thread formation (30) for mating engagement with an external thread formation of a container, the second closure portion (10b) including a polymeric tamper-evident band (18); and
slitting a lower portion of the annular skirt portion (14) along a first general line (42) and along a second general line (44), the first general line (42) forming a first frangible connection (22) that partially detachable connects a first section and a second section, the second general line (44) forming a second frangible connection (24) that partially detachable connects the annular skirt portion (14) and the tamper-evident band (18);
wherein when the first and second frangible connections (22, 24) are broken, a tethered bridge (32) is exposed, the tethered bridge (32) being attached to a portion of the second closure portion (10b) and a portion of the first closure portion (10a), the tethered bridge (32)
extending from 5 to 60 degrees around the circumference of the closure (10), each of the first and second frangible connections extending from 300 to 355 degrees around the circumference of the closure, and
wherein when the internal thread formation (30) of the first closure portion (10a) is not in mating engagement with the external thread formation of the container, the first closure portion (10a) being adapted to be spaced from the second closure portion (10b) via the tethered bridge.

12. The method according to claim 11, wherein the tethered bridge (32) extends from 15 to 35 degrees around the circumference of the closure (10) and wherein each of the first and second frangible connections (22, 24) extends from 325 to 345 degrees around the circumference of the closure (10).

13. The method according to claim 11 or 12, wherein the tethered bridge (32) is formed by double slitting, using two blades, formed in one process both first and second along general lines (42, 44) using scoring or scored lines, notches, leaders, nicks or line of weaknesses, to provide separation of the connection along both first and second general lines (42, 44) via respectively the first and second frangible connections (22, 24), wherein the first and second general lines (42, 44) are located on opposite sides of the tether to be formed.

14. The method according to claim 11 or 12, wherein the tethered bridge (32) is formed by using molds, in the absence of slitting, wherein the first and second general lines (42, 44) are formed by using bridges to provide separation of the connection along both general lines (42, 44) via respectively the first and second frangible connections (22, 24), wherein the molded-in-bridges do not extend entirely around the circumference of the closure (10).

## Patentansprüche

1. Einstückiger Verschluss (10), umfassend:
en ersten Verschlussabschnitt (10a), der umfasst:
einen polymeren Oberwandabschnitt (12); und
einen polymeren ringförmigen Einfassungsabschnitt (14), der vom polymeren Oberwandabschnitt (12) herabhängt, wobei der ringförmige Einfassungsabschnitt (14) eine Innengewindestruktur (30) zum Passeingriff mit einer Außengewindestruktur eines Behälters umfasst, der polymere ringförmige Einfassungsabschnitt (14) eine erste zerbrechliche Verbindung (22) umfasst, die teilweise lösbar mit einem ersten Teilstück und einem zweiten Teilstück des polymeren ringförmigen Einfassungsabschnitt (14) verbunden ist; und
einen zweiten Verschlussabschnitt (10b), der ein polymeres Originalitätsverschlussband (18) umfasst, wobei das Originalitätsverschlussband (18) vom polymeren ringförmigen Einfassungsabschnitt (14) herabhängt und durch eine zweite zerbrechliche Verbindung (24) teilweise lösbar damit verbunden ist;
wobei, wenn die erste und die zweite zerbrechliche Verbindung (22, 24) zerbrochen werden, ein Haltesteg (32) freigelegt wird, wobei der Haltesteg (32) an einem Abschnitt des zweiten Verschlussabschnitts (10b) und einem Abschnitt des ersten Verschlussabschnitts (10a) befestigt ist, der Haltesteg (32) sich von 5 bis 60 Grad um den Umfang des Verschlusses (10) erstreckt, wobei jede der ersten und der zweiten zerbrechlichen Verbindung (20, 24) sich von 300 bis 355 Grad um den Umfang des Verschlusses (10) erstreckt,
wobei der erste Verschlussabschnitt (10a) so ausgelegt ist, dass er vom zweiten Verschlussabschnitt (10b) durch den Haltesteg (32) beabstandet ist, wenn die Innengewindestruktur (30) des ersten Verschlussabschnitts (10a) nicht in Passeingriff mit der Außengewindestruktur des Behälters ist.

2. Verschluss nach Anspruch 1,
wobei der Haltesteg (32) sich von 5 bis 40 Grad um den Umfang des Verschlusses (10) erstreckt, und wobei jede der ersten und der zweiten zerbrechlichen Verbindung (22, 24) sich von 320 bis 355 Grad um den Umfang des Verschlusses (10) erstreckt, wobei der Haltesteg (32) sich vorzugsweise von 15 bis 35 Grad um den Umfang des Verschlusses (10) erstreckt, und wobei jede der ersten und der zweiten zerbrechlichen Verbindung (22, 24) sich von 325 bis 345 um den Umfang des Verschlusses (10) erstreckt.

3. Verschluss nach Anspruch 1 oder 2, wobei die Form des Verschlusses (10) im Allgemeinen zylindrisch ist.

4. Verschluss nach einem der Ansprüche 1 bis 3, wobei der Verschluss (10) ferner ein Sauerstofffängermaterial oder ein Sauerstoffsperrmaterial umfasst.

5. Verschluss nach einem der Ansprüche 1 bis 4, wobei die Innengewindestruktur (30) der ringförmigen Einfassungsabschnitte mindestens ein Schraubgewindeelement umfasst.

6. Verschluss nach Anspruch 1,
wobei die Länge des Haltestegs (32) größer als 3 mm ist.

7. Verschluss nach Anspruch 1,
wobei die Länge des Haltestegs (32) 2 bis 5 mm beträgt.

8. Verschluss nach einem der Ansprüche 1 bis 7, wobei der Verschluss (10) Polyolefine umfasst.

9. Verschluss nach einem der Ansprüche 1 bis 8, wobei der erste Verschlussabschnitt (10a) ferner eine polymere durchgehende Stopfendichtung (16) umfasst, die vom polymeren Oberwandabschnitt (12) herabhängt, wobei die durchgehende Stopfendichtung (16) von einer Innenfläche des polymeren ringförmigen Einfassungsabschnitt (14) beabstandet ist.

10. Verpackung, aufweisend:
einen Behälter (108) mit einem Verengungsabschnitt (102), der eine Öffnung definiert, wobei der Behälter (108) eine Außengewindestruktur (104) auf dem Verengungsabschnitt (102) aufweist;
einen einstückigen Verschluss (10) nach einem der Ansprüche 1 bis 9, der zur Passung mit dem Verengungsabschnitt (102) des Behälters zum Schließen der Öffnung ausgelegt ist, wobei der einstückige Verschluss (10) einen ersten Verschlussabschnitt (10a) und einen zweiten Verschlussabschnitt (10b) umfasst,
wobei die Innengewindestruktur (30) zum Passeingriff mit der Außengewindestruktur (104) des Verengungsabschnitts (102) des Behälters (108) ausgelegt ist.

11. Verfahren zur Bildung eines einstückigen Verschlusses (10), wobei das Verfahren umfasst:
Formen eines ersten Verschlussabschnitts (10a) und eines zweiten Verschlussabschnitts (10b) des einstückigen Verschlusses (10), wobei der erste Verschlussabschnitt (10a) einen polymeren Oberwandabschnitt (12) und einen polymeren ringförmigen Einfassungsabschnitt (14) umfasst, der vom polymeren Oberwandabschnitt (12) herabhängt, wobei der ringförmige Einfassungsabschnitt (14) eine Innengewindestruktur (30) zum Passeingriff mit einer Außengewindestruktur eines Behälters umfasst, und der zweite Verschlussabschnitt (10b) ein polymeres Originalitätsverschlussband (18) umfasst; und
Längsteilen eines unteren Abschnitts des ringförmigen Einfassungsabschnitts (14) entlang einer ersten allgemeinen Linie (42) und entlang einer zweiten allgemeinen Linie (44), wobei die erste allgemeine Linie (42) eine erste zerbrechliche Verbindung (22) bildet, die ein erstes Teilstück und ein zweites Teilstück teilweise lösbar verbindet, und die zweite allgemeine Linie (44) eine zweite zerbrechliche Verbindung (24) bildet, die den ringförmigen Einfassungsabschnitt (14) und das Originalitätsverschlussband (18) teilweise lösbar verbindet;
wobei, wenn die erste und die zweite zerbrechliche Verbindung (22, 24) zerbrochen werden, ein Haltesteg (32) freigelegt wird, wobei der Haltesteg (32) an einem Abschnitt des zweiten Verschlussabschnitts (10b) und einem Abschnitt des ersten Verschlussabschnitts (10a) befestigt ist, der Haltesteg (32) sich von 5 bis 60 Grad um den Umfang des Verschlusses (10) erstreckt, und jede der ersten und der zweiten zerbrechlichen Verbindung sich von 300 bis 355 Grad um den Umfang des Verschlusses (10) erstreckt,
wobei der erste Verschlussabschnitt (10a) so ausgelegt ist, dass er vom zweiten Verschlussabschnitt (10b) durch die Haltesteg beabstandet ist, wenn die Innengewindestruktur (30) des ersten Verschlussabschnitts (10a) nicht in Passeingriff mit der Außengewindestruktur des Behälters ist.

12. Verfahren nach Anspruch 11, wobei der Haltesteg (32) sich von 15 bis 35 Grad um den Umfang des Verschlusses (10) erstreckt, und wobei jede der ersten und der zweiten zerbrechlichen Verbindung (22, 24) sich von 325 bis 345 um den Umfang des Verschlusses (10) erstreckt.

13. Verfahren nach Anspruch 11 oder 12, wobei der Haltesteg (32) durch zweifache Längsteilung unter Verwendung zweier Messer gebildet wird, die sowohl entlang einer ersten als auch einer zweiten allgemeinen Linie (42, 44) unter Verwendung von Ritzen oder Ritzlinien, Kerben, Führungslinien, Einschnitten oder Schwächungslinien in einem Prozess gebildet wird, um eine Trennung der Verbindung sowohl entlang der ersten als auch der zweiten allgemeinen Linie (42, 44) durch die erste bzw. die zweite zerbrechliche Verbindung (22, 24) bereitzustellen, wobei die erste und die zweite allgemeine Linie (42, 44) sich auf gegenüberliegenden Seiten des Haltestegs befinden, der gebildet werden soll.

14. Verfahren nach Anspruch 11 oder 12, wobei der Haltesteg (32) bei Nichtvorhandensein von Längsteilung durch Verwenden von Formwerkzeugen gebildet wird, wobei die erste und die zweite allgemeine Linie (42, 44) durch Verwenden von Stegen gebildet werden, um eine Trennung der Verbindung entlang beider allgemeiner Linien (42, 44) durch die erste bzw. die zweite zerbrechliche Verbindung (22, 24) bereitzustellen, wobei die Stege sich nicht zur Gänze um den Umfang des Verschlusses (10) erstrecken.

## Revendications

1. Fermeture d'un seul tenant (10) comprenant :
une première partie de fermeture (10a) comprenant :
une partie de paroi supérieure polymère (12) ; et
une partie de jupe annulaire polymère (14) dépendant de la partie de paroi supérieure polymère (12), la partie de jupe annulaire (14) comprenant une formation de filet interne (30) pour la mise en prise par couplage avec une formation de filet externe d'un récipient, la partie de jupe annulaire polymère (14) comprenant un premier raccordement cassable (22) qui se raccorde, de manière partiellement détachable, à une première section et à une seconde section de la partie de jupe annulaire polymère (14) ; et
une seconde partie de fermeture (10b) comprenant une bande polymère d'inviolabilité (18), la bande d'inviolabilité (18) dépendant de et étant raccordée, de manière partiellement détachable, à la partie de jupe annulaire polymère (14) par un second raccordement cassable (24) ;
dans laquelle lorsque les premier et second raccordements cassables (22, 24) sont cassés, un pont amarré (32) est exposé, le pont amarré (32) étant fixé sur une partie de la seconde partie de fermeture (10b) et une partie de la première partie de fermeture (10a), le pont amarré (32) s'étendant de 5 à 60 degrés autour de la circonférence de la fermeture (10), dans laquelle chacun des premier et second raccordements cassables (20, 24) s'étend de 300 à 355 degrés autour de la circonférence de la fermeture (10),
dans laquelle lorsque la formation de filet interne (30) de la première partie de fermeture (10a) n'est pas en mise en prise par couplage avec la formation de filet externe du récipient, la première partie de fermeture (10a) étant adaptée pour être espacée de la seconde partie de fermeture (10b) via le pont amarré (32).

2. Fermeture selon la revendication 1,
dans laquelle le pont amarré (32) s'étend de 5 à 40 degrés autour de la circonférence de la fermeture (10) et dans laquelle chacun des premier et second raccordements cassables (22, 24) s'étend de 320 à 355 degrés autour de la circonférence de la fermeture (10), de préférence dans laquelle le pont amarré (32) s'étend de 15 à 35 degrés autour de la circonférence de la fermeture (10) et dans laquelle chacun des premier et second raccordements cassables (22, 24) s'étend de 325 à 345 degrés autour de la circonférence de la fermeture (10).

3. Fermeture selon la revendication 1 ou 2, dans laquelle la forme de la fermeture (10) est généralement cylindrique.

4. Fermeture selon une ou plusieurs des revendications 1 à 3, dans laquelle la fermeture (10) comprend en outre un matériau désoxygénant ou un matériau de barrière à l'oxygène.

5. Fermeture selon une ou plusieurs des revendications 1 à 4, dans laquelle la formation de filet interne (30) des parties de jupe annulaires comprend au moins un élément de filet hélicoïdal.

6. Fermeture selon la revendication 1,
dans laquelle la longueur du pont amarré (32) est supérieure à 3 mm.

7. Fermeture selon la revendication 1,
dans laquelle la longueur du pont amarré (32) est de 2 à 5 mm.

8. Fermeture selon une ou plusieurs des revendications 1 à 7, dans laquelle la fermeture (10) comprend des polyoléfines.

9. Fermeture selon une ou plusieurs des revendications 1 à 8, dans laquelle la première partie de fermeture (10a) comprend en outre un bouchon d'étanchéité continu polymère (16) dépendant de la partie de paroi supérieure polymère (12), le bouchon d'étanchéité continu (16) étant espacé d'une surface intérieure de la partie de jupe annulaire polymère (14).

10. Emballage comprenant :
un récipient (108) ayant une partie de goulot (102) définissant une ouverture, le récipient (108) ayant une formation de filet externe (104) sur la partie de goulot (102) ; et
une fermeture d'un seul tenant (10) selon une ou plusieurs des revendications 1 à 9, étant configurée pour être montée sur la partie de goulot (102) du récipient afin de fermer l'ouverture, la fermeture d'un seul tenant (10) comprenant une première partie de fermeture (10a) et une seconde partie de fermeture (10b),
dans lequel la formation de filet interne (30) est configurée pour la mise en prise par couplage avec la formation de filet externe (104) de la partie de goulot (102) du récipient (108).

11. Procédé pour former une fermeture d'un seul tenant (10), le procédé comprenant les étapes consistant à :
mouler une première partie de fermeture (10a) et une seconde partie de fermeture (10b) de la fermeture d'un seul tenant (10), la première partie de fermeture (10a) comprenant une partie de paroi supérieure polymère (12) et une partie de jupe annulaire polymère (14) dépendant de la partie de paroi supérieure polymère (12), la partie de jupe annulaire (14) comprenant une formation de filet interne (30) pour la mise en prise par couplage avec une formation de filet externe d'un récipient, la seconde partie de fermeture (10b) comprenant une bande polymère d'inviolabilité (18) ; et
fendre une partie inférieure de la partie de jupe annulaire (14) le long d'une première ligne générale (42) et le long d'une seconde ligne générale (44), la première ligne générale (42) formant un premier raccordement cassable (22) qui raccorde, de manière partiellement détachable, une première section et une seconde section, la seconde ligne générale (44) formant un second raccordement cassable (24) qui raccorde, de manière partiellement détachable, la partie de jupe annulaire (14) et la bande d'inviolabilité (18) ;
dans lequel lorsque les premier et second raccordements cassables (22, 24) sont cassés, un pont amarré (32) est exposé, le pont amarré (32) étant fixé sur une partie de la seconde partie de fermeture (10b) et une partie de la première partie de fermeture (10a), le pont amarré (32) s'étendant de 5 à 60 degrés autour de la circonférence de la fermeture (10), chacun des premier et second raccordements cassables s'étendant de 300 à 355 degrés autour de la circonférence de la fermeture, et
dans lequel lorsque la formation de filet interne (30) de la première partie de fermeture (10a) n'est pas en mise en prise par couplage avec la formation de filet externe du récipient, la première partie de fermeture (10a) étant adaptée pour être espacée de la seconde partie de fermeture (10b) via le pont amarré.

12. Procédé selon la revendication 11, dans lequel le pont amarré (32) s'étend de 15 à 35 degrés autour de la circonférence de la fermeture (10) et dans lequel chacun des premier et second raccordements cassables (22, 24) s'étend de 325 à 345 degrés autour de la circonférence de la fermeture (10).

13. Procédé selon la revendication 11 ou 12, dans lequel le pont amarré (32) est formé par une double fente, à l'aide de deux lames, formées dans un procédé, les deux la première et la seconde, le long des lignes générales (42, 44) à l'aide de lignes de rainurage ou rainurées, d'encoches, de guides, d'entailles ou d'une ligne de faiblesse, pour fournir la séparation du raccordement le long des première et seconde lignes générales (42, 44) respectivement via les premier et second raccordements cassables (22, 24), dans lequel les première et seconde lignes générales (42, 44) sont positionnées sur les côtés opposés de l'amarre à former.

14. Procédé selon la revendication 11 ou 12, dans lequel le pont amarré (32) est formé en utilisant des moules, en l'absence de fente, dans lequel les première et secondes lignes générales (42, 44) sont formées en utilisant des ponts pour fournir la séparation du raccordement le long des deux lignes générales (42, 44) respectivement via les premier et second raccordements cassables (22, 24), dans lequel les ponts moulés ne s'étendent pas complètement autour de la circonférence de la fermeture (10).
